# EUROPÄISCHE PATENTSCHRIFT

(11) **EP 0 763 804 B1**
(45) Veröffentlichungstag und Bekanntmachung des Hinweises auf die Patenterteilung: **21.11.2001**
(21) Anmeldenummer: 96113361.8
(22) Anmeldetag: 21.08.1996
(51) Int. Cl.: G08B 13/194

(54) **Vorrichtung zur Bewegungsdetektion aus einem Videosignal**
Device for motion detection from a video signal
Dispositif pour la détection de mouvement à partir d'un signal vidéo

(30) Priorität: 16.09.1995 DE 19534447
(43) Veröffentlichungstag der Anmeldung: 19.03.1997
(73) Patentinhaber: GRUNDIG Aktiengesellschaft, 90471 Nürnberg (DE)
(72) Erfinder: Elsinger, Horst, Dipl.-Ing., 90762 Fürth (DE)

(56) Entgegenhaltungen:
- EP-A- 0 290 413
- DE-A- 3 842 356

## Beschreibung

Die Erfindung betrifft eine Vorrichtung zur Bewegungsdetektion aus einem Videosignal nach dem Oberbegriff des Anspruches 1.

Derartige Vorrichtungen werden in Videoüberwachungssystemen eingesetzt, welche die Aufgabe haben, ein bestimmtes Gebiet auf Veränderungen, insbesondere Bewegungen, hin zu untersuchen und im Fall einer erkannten Veränderung ein Alarmsignal auszugeben.

Aus der europäischen Patentschrift EP 0 183 106 B1 ist ein Bildsensorsystem zur Detektion von Änderungen bekannt, bei dem ein aktuell aufgenommenes Bild mit einer Mehrzahl von abgespeicherten Bildern, die nicht alarmrelevante Änderungen enthalten, verglichen wird. Dieses Verfahren ist jedoch sehr aufwendig, da es einen großen Speicherplatzbedarf aufweist. Zudem wird für die Auswertung viel Zeit beansprucht, da jeweils das aufgenommene Bild mit einer Vielzahl von abgespeicherten Bildern verglichen werden muß.

Aus der deutschen Offenlegungsschrift DE 38 42 356 A1 ist ein System zur Bewegungsdetektion aus einem Videosignal bekannt, bei dem jeder Überwachungskamera eine Auswerteschaltung zugeordnet ist, die den Bildinhalt zeilenweise überprüft. Bei dieser Überprüfung wird zu jeder Zeile ein Mittelwert aus den Bildinformationen gebildet. Für alle Bildpunkte einer Zeile wird eine gleiche Sollabweichung von der jeweiligen Bildinformation vorgegeben und die Gesamtzahl der Bildpunkte des aktuellen Bildinhalts, die um mehr als die vorgegebene Sollabweichung vom jeweiligen Mittelwert abweicht, wird mit der entsprechenden Gesamtzahl der Bildpunkte eines gespeicherten Bildinhalts zur Bildung einer Differenz herangezogen. Bei Überschreiten der Differenz um einen bestimmten Schwellwert wird ein Alarm ausgelöst.

Aus der EP-A-290413 ist eine Vorrichtung zur Bewegungsdetektion aus einem optischen Signal bekannt, bei der das Signal auf zwei parallele Integratoren mit unterschiedlicher Zeitkonstante gegeben wird, deren Ausgangssignal verglichen wird.

Aufgabe der Erfindung ist es, eine Anordnung zur Bewegungsdetektion aus einem Videosignal anzugeben, das einfach aufgebaut und damit auch für nichtprofessionelle Anwendungen einsetzbar ist, wobei eine zuverlässige Detektion von Veränderungen im Überwachungsbereich gegeben sein soll.

Diese Aufgabe wird ausgehend von einer Vorrichtung nach dem Oberbegriff des Anspruches 1 durch die kennzeichnenden Merkmale des Anspruches 1 gelöst. Vorteilhafte Ausgestaltungen der Erfindung sind in den abhängigen Ansprüchen angegeben.

Gemäß der Erfindung ist ein erstes Filter mit integrierender Wirkung vorgesehen, auf das das Signal der ausgewählten Zeile geführt wird. Es ist weiterhin ein zweites Filter mit zum ersten Filter unterschiedlicher Zeitkonstante vorgesehen, das ebenfalls integrierende Wirkung aufweist. Das zweite Filter ist parallel zum ersten Filter angeordnet, so daß auch am zweiten Filter das Signal der ausgewählten Zeile anliegt. Auf diese Weise wird das Signal der ausgewählten Zeile in beiden Filtern zeitlich unterschiedlich verzögert bei gleichzeitiger Mittelung des Zeileninhaltes. In dem Fall, daß im Bildinhalt, d.h. im überwachten Bereich, keine Änderung auftritt, sind die Signale an den Ausgängen der Filter weitgehend identisch. Tritt eine Veränderung im überwachten Bereich auf, sind die Signale am Ausgang der Filter durch die unterschiedliche Zeitkonstante mit unterschiedlichen Laufzeiten behaftet, wodurch sich eine Differenz der beiden Signale ergibt, die ausgewertet werden kann.

Zur Auswertung werden die Ausgangssignale der Filter auf eine Einheit zur Bildung einer Differenz gegeben. Das Ausgangssignal dieser Einheit wird an einen Komparator gegeben, der das Differenzsignal mit einem vorgegebenen Schwellwert vergleicht. Bei Überschreiten des Schwellwertes wird ein Alarmsignal ausgegeben.

Mit der erfindungsgemäßen Vorrichtung wird eine einfache und kostengünstige Bewegungsdetektion aus einem Videosignal ermöglicht, die auch im nicht-professionellen Bereich Anwendung finden kann.

Durch die Vorgabe des Schwellwertes sowie durch die Zeitkonstanten der Filter kann auf einfache Weise die Ansprechempfindlichkeit für die Alarmgabe vorgegeben werden.

Die Schaltung zur Auswahl einer Zeile eines Videobildes besteht in vorteilhafter Weise aus einer Einheit zur Abtrennung des Vertikalsynchronimpulses, einem Monoflop zur Anwahl einer Zeile, und einem Schalter, der vom Monoflop angesteuert wird und der nur das Videosignal der ausgewählten Zeile an die Filter durchschaltet. Zu diesem Zweck ist der Schalter so ausgeführt, daß er nach einer vorgegebenen Zeitdauer, die einer Zeilenlänge entspricht, automatisch wieder in den geöffneten Zustand übergeht.

Zur Erhöhung der Auswertesicherheit kann der Schalter so ausgeführt sein, daß die vorgegebene Zeitdauer, während der der Schalter geschlossen bleibt, ein vielfaches einer Zeilendauer entspricht. Damit wird der zur Auswertung bestimmte Bereich vergrößert, wodurch sich die Sicherheit bei der Erkennung einer alarmrelavanten Veränderung im überwachten Bereich erhöht.

Zur Auswahl einer oder mehrerer Zeilen kann auch ein zweites Monoflop vorgesehen sein, das durch das erste getriggert wird und und ein Schaltsignal erzeugt, das der Dauer einer vorgegebenen Anzahl von Zeilen entspricht. In diesem Fall ist der Schalter so ausgeführt, daß er nur während der Zeitdauer, in der das Schaltsignal anliegt geschlossen ist.

Eine weitere vorteilhafte Ausgestaltung der Erfindung sieht einen Tiefpaß vor, der das am Ausgang der Einheit zur Differenzbildung anliegende Signal filtert. Durch diese Filterung werden Störungen, die eine sichere Auswertung behindern könnten, eliminiert.

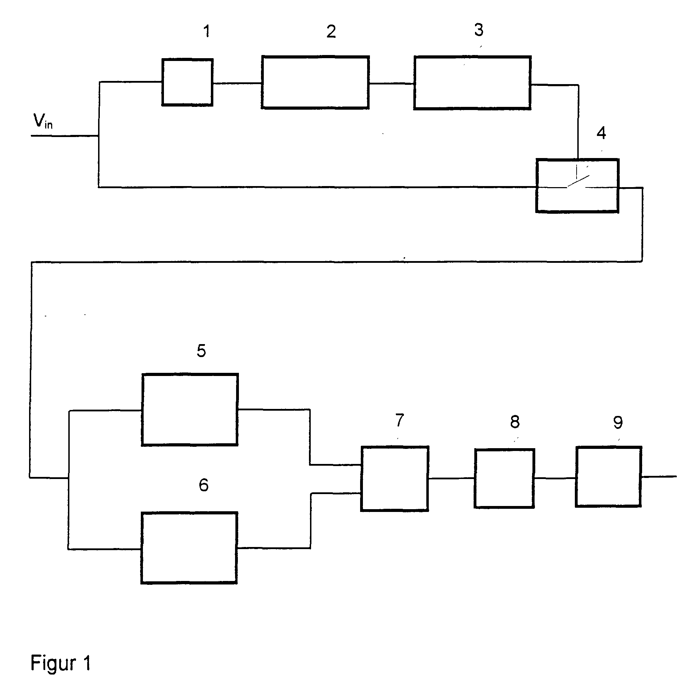

Im folgenden wird die Erfindung an Hand eines Ausführungsbeispieles nach Figur 1 erläutert. Diese Figur zeigt ein Blockschaltbild der erfindungsgemäßen Vorrichtung.

Das von einer Überwachungskamera aufgenommene Videosignal Vᵢₙ wird an eine Einheit 1 gegeben, die den Vertikalsynchronimpuls aus dem Videosignal abtrennt. Das Ausgangssignal dieser Einheit 1 wird an ein Monoflop 2 geführt. Das Monoflop wird durch den Vertikalsynchronimpuls getriggert und erzeugt ein Schaltsignal, das an einen Schalter 4 gegeben wird. Der Schalter 4 geht für die Dauer einer oder mehrerer Zeilen vom offenen Zustand in den geschlossenen Zustand über. Während dieser Zeitdauer wird das Videosignal, das ebenfalls am Schalter 4 anliegt, weitergeschaltet.

Optional kann zwischen dem Monoflop 2 und dem Schalter 4 ein zweites Monoflop angeordnet sein, das vom ersten getriggert wird und für eine vorgebbare Zeitdauer, die mehrere Zeilen umfassen kann, ein Schaltsignal an den Schalter 4 liefert, so daß das durchgeschaltete Videosignal ein oder mehrere Zeilen umfaßt.

Das durchgeschaltete Videosignal wird an die Filter 5 und 6 gegeben. Diese Filter weisen unterschiedliche Zeitkonstanten auf und haben integrierende Wirkung. Damit wird das Videosignal gemittelt und unterschiedlich verzögert. Die auf diese Weise veränderten Signale werden an eine Einheit 7 geführt, in der die Differenz der beiden Signale gebildet wird. Das Differenzsignal wird über einen Tiefpaß 8 an einen Schwellwertdetektor 9 gegeben, in dem es mit einer vorgebbaren Schwelle verglichen wird. Bei Überschreiten des Schwellwertes wird ein Alarmsignal ausgegeben.

## Patentansprüche

1. Vorrichtung zur Bewegungsdetektion aus einem Videosignal mit einer Schaltung (1; 2; 4) zur Auswahl einer Zeile eines Videobildes die zur Auswertung herangezogen wird,
**gekennzeichnet durch**
- ein erstes Filter (5) mit integrierender Wirkung auf das das Signal der ausgewählten Zeile geführt wird,
- ein zweites Filter (6) mit integrierender Wirkung und mit zum ersten Filter (5) unterschiedlicher Zeitkonstante, das parallel zum ersten Filter (5) angeordnet ist, und an dem ebenfalls das Signal der ausgewählten Zeile anliegt,
- eine Einheit (7) zur Bildung der Differenz aus den Signalen am Ausgang des ersten Filters (5) und des zweiten Filters (6) und
- einer Vergleichseinheit (9) welche die Differenz mit einem vorgegebenen Schwellwert vergleicht und bei Überschreiten des Schwellwertes ein Alarmsignal ausgibt.

2. Vorrichtung nach Anspruch 1,
**dadurch gekennzeichnet, daß**
die Schaltung (1, 2, 4) zur Anwahl einer Zeile eines Videobildes aus einer Einheit (1) zur Abtrennung des Vertikalsynchronimpulses, einem Monoflop (2) zur Anwahl einer Zeile, und einem Schalter (4) besteht, der nur das Videosignal der angewählten Zeile an die Filter (5, 6) durchschaltet.

3. Vorrichtung nach Anspruch 1 oder 2,
**dadurch gekennzeichnet, daß**
ein zweites Monoflop (3) vorgesehen ist, das vom ersten Monoflop (2) getriggert wird und für eine vorbestimmte Zeitdauer entsprechend einer oder mehrerer Zeilen ein Schaltsignal ausgibt.

4. Vorrichtung nach einem der Ansprüche 1 bis 3,
**dadurch gekennzeichnet, daß**
ein Tiefpaß (8) vorgesehen ist, der das am Ausgang der Einheit (7) zur Differenzbildung anliegende Signal filtert.

## Claims

1. A device for movement detection from a video signal comprising a circuit (1; 2; 4) for selecting a line of a video image which is used for the analysis,
**characterised by**
- a first filter (5) with an integrating effect to which the signal of the selected line is fed,
- a second filter (6) with an integrating effect and with a different time constant to the first filter (5), which is arranged in parallel to the first filter (5) and to which the signal of the selected line is likewise applied,
- a unit (7) for forming the difference between the signals at the output of the first filter (5) and the second filter (6) and
- a comparator unit (9) which compares the difference with a preset threshold value and emits an alarm signal upon the overshooting of the threshold value.

2. A device according to Claim 1,
**characterised in that**
the circuit (1, 2, 4) for selecting a line of a video image consists of a unit (1) for separating the vertical synchronizing pulse, a monoflop (2) for selecting a line, and a switch (4) which only switches through the video signal of the selected line to the filters (5, 6).

3. A device according to Claim 1 or 2,
**characterised in that**
a second monoflop (3) is provided which is triggered by the first monoflop (2) and emits a switching signal for a predetermined time period corresponding to one or more lines.

4. A device according to one of Claims 1 to 3,
**characterised in that**
a low-pass filter (8) is provided which filters the signal present at the output of the difference-forming unit (7).

## Revendications

1. Dispositif de détection de mouvement à partir d'un signal vidéo comportant un circuit (1; 2; 4) pour sélectionner une ligne d'une image vidéo, qui est utilisée pour l'évaluation, **caractérisé par**
- un premier filtre (5) à effet d'intégration, auquel est envoyé le signal de la ligne sélectionnée;
- un second filtre (6) à effet d'intégration, qui présente une constante de temps différente de celle du premier filtre (5) et est branché avec le premier filtre (5) et auquel est également appliqué le signal de la ligne sélectionnée,
- une unité (7) pour former la différence entre les signaux présents aux sorties du premier filtre (5) et du second filtre (6), et
- une unité de comparaison (9), qui compare la différence à une valeur de seuil prédéterminée et délivre un signal d'alarme, en cas de dépassement de la valeur de seuil.

2. Dispositif selon la revendication 1, **caractérisé en ce que** le circuit (1, 2, 4) servant à sélectionner une ligne d'une image vidéo est constitué par une unité (1) servant à séparer l'impulsion de synchronisation verticale, un multivibrateur monostable (2) pour sélectionner une ligne et un interrupteur (4), qui transmet uniquement le signal vidéo de la ligne sélectionnée aux filtres (5, 6).

3. Dispositif selon la revendication 1 ou 2, **caractérisé en ce qu'**il est prévu un second multivibrateur monostable (3), qui est déclenché par le premier multivibrateur monostable (2) et délivre un signal de commutation pendant une durée prédéterminée, conformément à une ou plusieurs lignes.

4. Dispositif selon l'une des revendications 1 à 3, **caractérisé en ce qu'**il est prévu un filtre passe-bas (8), qui filtre le signal présent à la sortie de l'unité (7) de formation de différence.
